# EUROPÄISCHE PATENTSCHRIFT

(11) **EP 4 281 337 B1**
(45) Veröffentlichungstag und Bekanntmachung des Hinweises auf die Patenterteilung: **29.07.2026**
(21) Anmeldenummer: 21701729.2
(22) Anmeldetag: 21.01.2021
(51) Int. Cl.: B60S 1/48, B60S 1/56, F16K 11/074, B60S 1/54

(54) **SENSORVORRICHTUNG UND VERFAHREN ZUM BETREIBEN EINER SENSORVORRICHTUNG**
SENSOR DEVICE AND METHOD FOR OPERATING A SENSOR DEVICE
DISPOSITIF DE CAPTEUR ET PROCÉDÉ DE FONCTIONNEMENT D'UN DISPOSITIF DE CAPTEUR

(43) Veröffentlichungstag der Anmeldung: 29.11.2023
(73) Patentinhaber: Pierburg GmbH, 41460 Neuss (DE)
(72) Erfinder: BADEN, Matthias, 41460 Neuss (DE); KREBBER-HORTMANN, Karl, 41460 Neuss (DE)
(74) Vertreter: Eisenführ Speiser
(86) Internationale Anmeldenummer: PCT/EP2021/051332
(87) Internationale Veröffentlichungsnummer: WO 2022/156894

(56) Entgegenhaltungen:
- DE-A1- 102011 108 396
- US-A1- 2015 040 953
- US-A1- 2018 251 099
- US-A1- 2018 290 631
- US-A1- 2019 136 988
- US-A1- 2020 001 331
- US-A1- 2020 361 421

## Beschreibung

Die Erfindung betrifft eine Sensorvorrichtung für ein Kraftfahrzeug, mit mindestens zwei optischen Sensoren, und einer Reinigungsvorrichtung mit mehreren Reinigungsdüsen, wobei auf optischen Sensoren jeweils eine Reinigungsdüse gerichtet ist, und einem Reinigungsmittelverteiler, welcher ein Verteilergehäuse mit einem Reinigungsmitteleinlass und mehrere Reinigungsmittelauslässe aufweist, wobei der Reinigungsmitteleinlass mit einem Reinigungsmittelreservoir fluidisch verbindbar ist und die Reinigungsmittelauslässe mit jeweils einer Reinigungsdüse fluidisch verbunden sind.

Kraftfahrzeuge mit optischen Sensoren, wie zum Beispiel einer Kamera, einem Laser oder Ähnlichem, sind allgemein bekannt und dienen der Erfassung des Kraftfahrzeugumfeldes. Derartige optische Sensoren sind beispielsweise Bestandteile einer Einparkhilfsvorrichtung, einer Sicherheitsvorrichtung zur Vermeidung von sogenannten Dooring-Unfällen oder einer Vorrichtung zum autonomen Fahren. In allen Fällen sind üblicherweise mehrere optische Sensoren vorgesehen, durch welche zumindest das unmittelbare Kraftfahrzeugumfeld zuverlässig erfasst werden kann.

In der Praxis hat sich herausgestellt, dass die optischen Sensoren einer Beanspruchung durch Feuchtigkeit und Schmutz, insbesondere Schlamm, Pollen oder Staub, ausgesetzt sind. Diese Verunreinigungen können dazu führen, dass die Qualität der Sensorsignale der optischen Sensoren aufgrund der Verunreinigungen eingeschränkt wird. Um die Einschränkung der Erfassungsqualität der optischen Sensoren zu vermeiden, ist es bekannt die Sensorvorrichtungen mit einer Reinigungsvorrichtung auszustatten, wobei durch die Reinigungsvorrichtung die Verschmutzungen auf den transparenten Abdeckelementen der optischen Sensoren entfernt werden können. Die Reinigungsvorrichtung weist üblicherweise Reinigungsdüsen auf, welche auf die optischen Sensoren bzw. auf die Abdeckelemente der optischen Sensoren gerichtet sind, wobei ein aus den Reinigungsdüsen austretendes flüssiges Reinigungsmittel auf den entsprechenden Sensor bzw. das entsprechende Abdeckelement gesprüht wird und der Sensor bzw. das Abdeckelement dadurch gereinigt wird.

Eine derartige Sensorvorrichtung eines Kraftfahrzeugs offenbart beispielsweise die DE 10 2018 121 812 A1. Die Sensorvorrichtung weist mehrere auf einem Fahrzeugdach angeordnete optische Sensoren auf, durch welche die Kraftfahrzeugumgebung erfasst wird. Dabei sind die optischen Sensoren nach vorne, nach hinten und zu beiden Seiten gerichtet. Um eine Beeinträchtigung der optischen Sensoren durch Verschmutzungen zu vermeiden, weist die Sensorvorrichtung eine Reinigungsvorrichtung auf. Die Reinigungsvorrichtung umfasst für jeden optischen Sensor eine separate Reinigungsdüse, welche auf eine Abdeckung des jeweiligen optischen Sensors gerichtet ist. Die Reinigungsdüsen sind über einen Reinigungsmittelverteiler mit einem Reinigungsmittelreservoir fluidisch verbunden. Der Reinigungsmittelverteiler weist einen Reinigungsmitteleinlass auf, welcher über eine Pumpe und ein Absperrventil mit dem Reinigungsmittelreservoir fluidisch verbunden ist. Weiterhin umfasst der Reinigungsmittelverteiler je Reinigungsdüse einen Reinigungsmittelauslass, welche mit den entsprechenden Reinigungsdüsen fluidisch verbunden sind. Um einen Reinigungsmittelmassenstrom vom Reinigungsmittelverteiler zu einer Reinigungsdüse freizugeben oder abzusperren, ist an jedem Reinigungsmittelauslass ein separates Absperrventil vorgesehen.

Weitere Ausführungen einer Sensorvorrichtung mit einer Reinigungsvorrichtung sind in der US 2019/136988 A1, der US 2020/001331 A1, der US 2018/251099 A1, der US 2015/040953 A1, der US 2020/361421 A1 und in der US 2018/290631 A1 offenbart. Die US 2019/136988 A1 offenbart eine Sensorvorrichtung für ein Kraftfahrzeug, welche mehrere optische Sensoren und eine Reinigungsvorrichtung umfasst, wobei die Reinigungsvorrichtung mehrere, auf die optischen Sensoren gerichtete Reinigungsdüsen und einen Reinigungsmittelverteiler aufweist. Der Reinigungsmittelverteiler umfasst ein Verteilergehäuse mit einem Reinigungsmitteleinlass und mehreren Reinigungsmittelauslässen. Der Reinigungsmittelverteiler weist ein Verteilerventil mit einem zwischen dem Reinigungseinlass und den Reinigungsauslässen angeordneten Ventilkörper auf. Der Ventilkörper ist eine Drehscheibe, welche derart verdrehbar ist, dass ein Reinigungsmittelstrom zwischen dem Reinigungsmitteleinlass und den unterschiedlichen Reinigungsauslässen einstellbar ist.

Ferner ist in der DE 10 2011 1 08396 A1 eine Vorrichtung zur Dosierung und Mischung von Fluiden bekannt, welche eine Eingangsscheibe, eine Ausgangscheibe und einen Zwischenscheibe aufweist, wobei die Zwischenscheibe relativ zu der Eingangs- und der Ausgangsscheibe verdrehbar ist.

Nachteilig an einer derartigen Sensorvorrichtung mit einer Reinigungsvorrichtung ist, dass der Reinigungsmittelmassenstrom zu den einzelnen Reinigungsdüsen durch jeweils ein separates Absperrventil freigegeben oder abgesperrt wird, wodurch der erforderliche Bauraum der Reinigungsvorrichtung und die Herstellungskosten relativ hoch sind. Weiterhin ist der Steuerungsaufwand aufgrund der einzelnen Ansteuerung der einzelnen Absperrventile relativ hoch.

Es stellt sich daher die Aufgabe, eine Sensorvorrichtung mit einer Reinigungsvorrichtung bereitzustellen, wobei die Reinigungsvorrichtung einen geringen Bauraum aufweist, mit einem geringen Herstellungsaufwand hergestellt werden kann und eine einfache Ansteuerung zur Reinigung der optischen Sensoren aufweist.

Diese Aufgabe wird durch eine Sensorvorrichtung mit den Merkmalen des Hauptanspruchs 1 gelöst.

Erfindungsgemäß weist der Reinigungsmittelverteiler ein Verteilerventil mit einem einzigen Ventilkörper auf, wobei der Ventilkörper fluidisch zwischen dem Reinigungsmitteleinlass und den Reinigungsmittelauslässen angeordnet ist, und wobei der Ventilkörper in Abhängigkeit von seiner Stellung den Reinigungsmittelmassenstrom zwischen dem Reinigungsmitteleinlass und den Reinigungsmittelauslässen steuert. Der Ventilkörper ist beispielsweise in seiner Grundstellung derart angeordnet, dass der Reinigungsmitteleinlass mit keinem der Reinigungsmittelauslässen fluidisch verbunden ist. Wird die Reinigung eines optischen Sensors bzw. der transparenten Abdeckung eines der beiden optischen Sensoren, beispielsweise durch eine automatische Erkennung oder durch eine manuelle Anforderung durch Betätigen eines Knopfes, angefordert, wird der Ventilkörper in eine dem verschmutzten optischen Sensor zugeordnete Stellung verstellt, wodurch eine fluidische Verbindung zwischen dem Reinigungsmitteleinlass und dem dem verschmutzten optischen Sensor zugeordneten Reinigungsmittelauslass und dadurch der dem verschmutzten optischen Sensor zugeordneten Reinigungsdüse hergestellt. Bei einer Verschmutzung eines anderen optischen Sensors wird der Ventilkörper in eine andere, dem verschmutzten optischen Sensor zugeordnete Stellung verstellt.

Durch eine derartige Ausgestaltung der Sensorvorrichtung, insbesondere des Verteilerventils, wird der Bauraum der Sensorvorrichtung verkleinert und der Herstellungsaufwand reduziert, da lediglich ein einziges Ventil hergestellt und montiert werden muss. Weiterhin wird die Ansteuerung vereinfacht, da lediglich ein Verteilerventil angesteuert werden muss.

Der Ventilkörper ist eine Drehscheibe, welche an dem Verteilergehäuse anliegt und relativ zum Verteilergehäuse verdrehbar ist, wobei die Drehscheibe eine Durchgangsöffnung aufweist, welche mit dem Reinigungsmitteleinlass fluidisch verbunden ist, wobei die Durchgangsöffnung sich in unterschiedlichen Stellungen der Drehscheibe mit unterschiedlichen, am Verteilergehäuse vorgesehenen Reinigungsmittelauslässen überlagert. Die Drehscheibe liegt mit einer ersten Seite an dem Verteilergehäuse an, wobei das Verteilergehäuse an seinem an die Drehscheibe angrenzenden Bereich mehrere Reinigungsmittelauslässe aufweist. An der entgegengesetzten, zweiten Seite der Drehscheibe ist beispielsweise ein mit dem Reinigungsmittel füllbarer Einlassraum vorgesehen, welcher beispielsweise durch das Verteilergehäuse und die Drehscheibe begrenzt ist und über den am Verteilergehäuse vorgesehenen Reinigungsmitteleinlass mit Reinigungsmittel befüllbar ist. Die Durchgangsöffnung erstreckt sich zwischen den beiden Seiten, so dass die Durchgangsöffnung dauerhaft mit dem mit dem Reinigungsmittel gefüllten Einlassraum und dadurch mit dem Reinigungsmitteleinlass fluidisch verbunden ist. Durch die Verdrehung der Drehscheibe und damit der Verlagerung der Durchgangsöffnung überlagert sich in vordefinierten Stellungen der Drehscheibe die Durchgangsöffnung mit einem der Reinigungsmittelauslässe, wodurch sich ein Kanal ausgehend von dem Einlassraum zum Reinigungsmittelauslass ausbildet. In Abhängigkeit von der Stellung der Drehscheibe kann der eine oder der andere Reinigungsmittelauslass mit Reinigungsmittel versorgt werden. In einer Stellung der Drehscheibe, in welcher sich keiner der Reinigungsmittelauslässe mit der Durchgangsöffnung der Drehscheibe überlagern, ist das Verteilerventil geschlossen.

Durch einen derartigen Ventilkörper kann der Bauraum und der Herstellungsaufwand des Verteilerventils und des Reinigungsmittelverteilers reduziert werden, da lediglich ein einziger Ventilkörper zur Steuerung des Reinigungsmittelmassenstroms zu unterschiedlichen Reinigungsdüsen verwendet wird. Insbesondere bei vielen Reinigungsdüsen, beispielsweise 5, 6 oder mehr Reinigungsdüsen, kann auf eine einfache Weise der Reinigungsmittelmassenstrom zu den einzelnen Reinigungsdüsen über den Ventilkörper gesteuert werden, wobei lediglich die Anzahl der Reinigungsmittelauslässe erhöht werden muss und die Drehscheibe identisch bleibt.

Das Verteilergehäuse weist eine gehäusefeste Gegenscheibe auf, an welcher die Drehscheibe anliegt, wobei die Gegenscheibe mehrere Verbindungsöffnungen aufweist, wobei jede Verbindungsöffnung mit jeweils einem Reinigungsmittelauslass fluidisch verbunden ist. Durch die Gegenscheibe kann die Dichtwirkung zwischen den beiden aneinander anliegenden Kontaktflächen der Drehscheibe und der Gegenscheibe erhöht werden und der Reibwiderstand zwischen der Drehscheibe und der Gegenscheibe bei einer Relativverdrehung reduziert werden, indem der Werkstoff und die Oberflächenrauigkeit der Kontaktflächen der Drehscheibe und der Gegenscheibe entsprechend gewählt werden.

In einer bevorzugten Ausgestaltung sind die Drehscheibe und die Gegenscheibe aus einem Keramikwerkstoff hergestellt, wodurch die Dichtwirkung zwischen den beiden Kontaktflächen der Drehscheibe und der Gegenscheibe erhöht wird und die Reibung zwischen den beiden Kontaktflächen reduziert wird.

In einer bevorzugten Ausgestaltung ist der Reinigungsmitteleinlass an einer Seitenwand des Verteilergehäuses vorgesehen und die Reinigungsmittelauslässe an einer Stirnwand des Verteilergehäuses. Dadurch kann die axiale Länge des Reinigungsmittelverteilers reduziert werden.

Vorzugsweise ist an einer Außenseite des Verteilergehäuses ein Aktor angeordnet, welcher mit einer Aktorwelle in das Verteilergehäuse ragt und mit dem Ventilkörper wirkverbunden ist. Dadurch kann der Ventilkörper zuverlässig verstellt werden. Durch die Anordnung des Aktors außerhalb des Verteilergehäuses, insbesondere durch eine lösbare Anordnung des Aktors am Verteilergehäuse, kann der Aktor bei einem Defekt auf eine einfache Weise ausgetauscht werden.

In einer bevorzugten Ausgestaltung ist die Aktorwelle in Drehrichtung formschlüssig mit der Drehscheibe verbunden. Dadurch kann die Montage des Aktors vereinfacht werden, wobei die Kopplung der Aktorwelle zwischen der Aktorwelle und der Ventilkörper in Verstellrichtung ausschließlich durch das Montieren des Aktors am Verteilergehäuse hergestellt wird. Des Weiteren können Maßabweichungen des Reinigungsmittelverteilers in Längsrichtung der Aktorwelle ausgeglichen werden, indem die Aktorwelle ausschließlich in Drehrichtung des Ventilkörpers mit dem Ventilkörper verbunden ist.

Vorzugsweise sind in Strömungsrichtung des Reinigungsmittels zwischen dem Reinigungsmittelverteiler und dem Reinigungsmitteltank ein Reinigungsmittel-Absperrventil und eine Pumpe angeordnet. Dadurch kann der Reinigungsmittelverteiler einfacher ausgeführt werden, da der Massenstrom des Reinigungsmittels bereits durch das Reinigungsmittel-Absperrventil und eine Nichtbetätigung der Pumpe abgesperrt wird.

In einer bevorzugten Ausgestaltung ist eine Luftzuführvorrichtung vorgesehen, welche ein Luftreservoir und einen Verdichter aufweist, wobei das Luftreservoir mit dem Reinigungsmitteleinlass des Reinigungsmittelverteilers fluidisch verbindbar ist. Die Luftzuführvorrichtung dient der Trocknung des zuvor gereinigten optischen Sensors bzw. der zuvor gereinigten, transparenten Abdeckung, wobei der optische Sensor oder die transparente Abdeckung zeitlich versetzt zur Reinigung durch das Reinigungsmittel mit Druckluft angeströmt wird und dadurch Reinigungsmittelablagerungen auf der Abdeckung und die Bildung von Eis bei Temperaturen unter 0°C verhindert werden. Andererseits kann die Druckluft unabhängig von der Reinigung durch das Reinigungsmittel eingesetzt werden, indem beispielsweise eine Verschmutzung des optischen Sensors durch Pollen oder Staub ausschließlich durch die Druckluft, d.h. ohne ein flüssiges Reinigungsmittel, gereinigt wird.

Vorzugsweise sind in Strömungsrichtung der Luft zwischen dem Reinigungsmittelverteiler und dem Luftreservoir ein Luft-Absperrventil und ein Verdichter angeordnet. Dadurch kann der Druckluftmassenstrom bedarfsgerecht bereitgestellt werden.

In einer bevorzugten Ausgestaltung ist ein 3/3-Wegeventil vorgesehen, welches das Reinigungsmittel-Absperrventil und das Luft-Absperrventil bildet, wobei in einer ersten Stellung das 3/3-Wegeventil geschlossen ist, in einer zweiten Stellung das Reinigungsmittelreservoir mit dem Reinigungsmitteleinlass fluidisch verbunden ist und in einer dritten Stellung das Luftreservoir mit dem Reinigungsmitteleinlass fluidisch verbunden ist. Dadurch kann die Sensorvorrichtung vereinfacht werden, wobei das Luft-Absperrventil und das Reinigungsmittel-Absperrventil durch ein einziges Ventil ausgeführt werden. In einer bevorzugten Ausgestaltung ist das Reinigungsmittel-Absperrventil, das Luft-Absperrventil und/oder das 3/3-Wegeventil als ein elektromagnetisches Ventil ausgeführt.

Die Aufgabe wird außerdem durch ein Verfahren zum Betreiben einer Sensorvorrichtung nach Anspruch 1 bis 10 gelöst. Das Verfahren umfasst folgenden Schritte:
- Feststellen einer Verschmutzung eines optischen Sensors,
- Verstellen des Ventilkörpers in eine vordefinierte Position zum Herstellen einer fluidischen Verbindung zwischen dem Reinigungsmitteleinlass und dem dem verschmutzen Sensor zugeordneten Reinigungsmittelauslasses,
- Betätigen der Reinigungsmittel-Pumpe.

Zu den Vorteilen des Verfahrens zum Betreiben einer Sensorvorrichtung wird auf die vorhergehenden Absätze verwiesen.

Es wird eine Sensorvorrichtung mit einem Reinigungsmittelverteiler geschaffen, welche einen reduzierten Bauraum und einen reduzierten Herstellungsaufwand erfordert, wobei lediglich ein einziges Ventil hergestellt und montiert werden muss.

Mehrere Ausführungsbeispiele einer erfindungsgemäßen Sensorvorrichtung sind in den Figuren dargestellt und werden nachfolgend beschrieben.
Figur 1 zeigt ein Kraftfahrzeug mit einer Sensorvorrichtung,
Figur 2 zeigt eine erste Ausführung einer Sensorvorrichtung,
Figur 3 zeigt eine zweite Ausführung einer Sensorvorrichtung,
Figur 4 zeigt eine dritte Ausführung einer Sensorvorrichtung,
Figur 5 zeigt eine vierte Ausführung einer Sensorvorrichtung, und
Figur 6 zeigt eine Ausführung eines Reinigungsmittelverteilers.

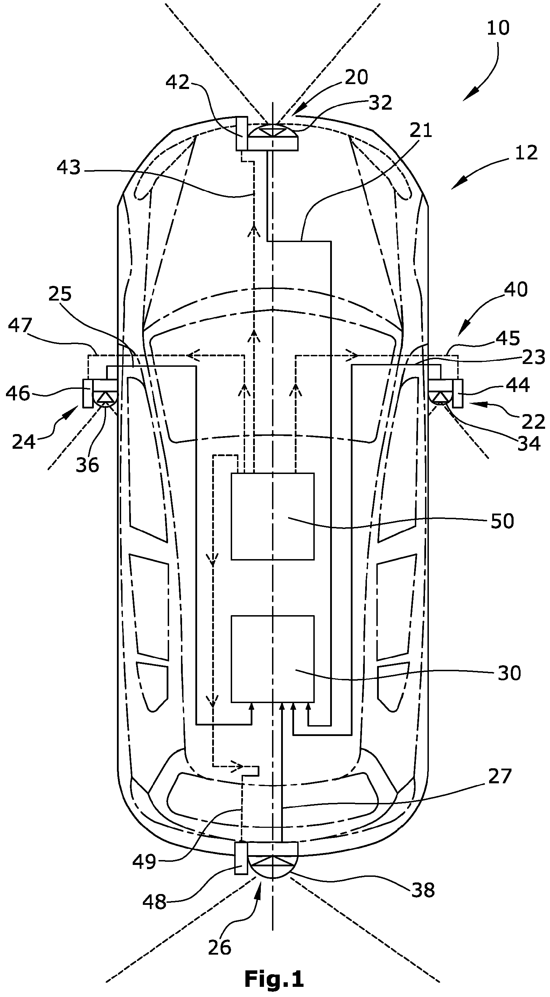

Die Figur 1 zeigt ein Kraftfahrzeug 10, welches zur Überwachung einer Fahrzeugumgebung eine Sensorvorrichtung 12 mit mehreren optischen Sensoren 20, 22, 24, 26 aufweist. Jeder optische Sensor 20, 22, 24, 26 erfasst einen vordefinierten Bereich der Fahrzeugumgebung, wobei beispielsweise die Sensoren 22, 24 den Bereich jeweils einer Fahrzeugtür erfassen, wodurch insbesondere die Gefahr eines Dooring-Unfalls reduziert wird. Der Sensor 20 erfasst den Bereich vor dem Kraftfahrzeug 10 und der Sensor 26 erfasst den Bereich hinter dem Kraftfahrzeug 10. Die optischen Sensoren 20, 22, 24, 26 sind über jeweils eine Sensorleitung 21, 23, 25, 27 mit einer Steuereinheit 30 signaltechnisch verbunden, wobei die Steuereinheit 30 die Sensorsignale der optischen Sensoren 20, 22, 24, 26 auswertet. Die von der Steuereinheit 30 ausgewerteten Sensorsignale können beispielsweise dazu dienen, dass einem Fahrzeuginsassen, insbesondere dem Fahrer des Kraftfahrzeugs 10 Gefahrensituationen in einem Display angezeigt werden oder direkt vordefinierte Prozesse zur Erhöhung der Sicherheit eingeleitet werden. Beispielsweise kann durch entsprechende Vorrichtungen das Verhindern des Öffnens der Fahrzeugtür bei einem durch den optischen Sensor 22, 24 erkannten Gegenstand oder einer Person, eingeleitet werden.

Um eine zuverlässige Funktionsweise der Sensorvorrichtung 12 zu gewährleisten, müssen die optischen Sensoren 20, 22, 24, 26 jederzeit ein zuverlässiges Sensorsignal liefern. Die optischen Sensoren 20, 22, 24, 26 sind der Witterung und anderen Umgebungseinflüssen ausgesetzt, wodurch die Gefahr besteht, dass die optischen Sensoren 20, 22, 24, 26 bzw. eine transparente Abdeckung 32, 34, 36, 38 der Sensoren 20, 22, 24, 26 durch Feuchtigkeit, Schlamm, Pollen oder Staub verschmutzen und dadurch die optischen Sensoren 20, 22, 24, 26 kein zuverlässiges Sensorsignal mehr liefern können. Dadurch kann die Fahrzeugumgebung nicht mehr zuverlässig erfasst werden.

Um jederzeit zuverlässige Signale der optischen Sensoren 20, 22, 24, 26 zu gewährleisten, weist die Sensorvorrichtung 12 eine Reinigungsvorrichtung 40 auf. Die Reinigungsvorrichtung 40 weist unter anderem mehrere Reinigungsdüsen 42, 44, 46, 48 auf, welche in der Figur 1 schematisch dargestellt sind und jeweils einem optischen Sensor 20, 22, 24, 26 zugeordnet sind. Die Reinigungsdüsen 42, 44, 46, 48 sind auf die transparenten Abdeckungen 32, 34, 36, 38 der optischen Sensoren 20, 22, 24, 26 gerichtet, so dass die Verschmutzung durch einen durch die jeweilige Reinigungsdüse 42, 44, 46, 48 erzeugten Reinigungsmittelstrahl entfernt werden kann. Die Reinigungsdüsen 42, 44, 46, 48 sind über jeweils eine Reinigungsmittelleitung 43, 45, 47, 49 mit einem Reinigungsmittelverteiler 50 fluidisch verbunden.

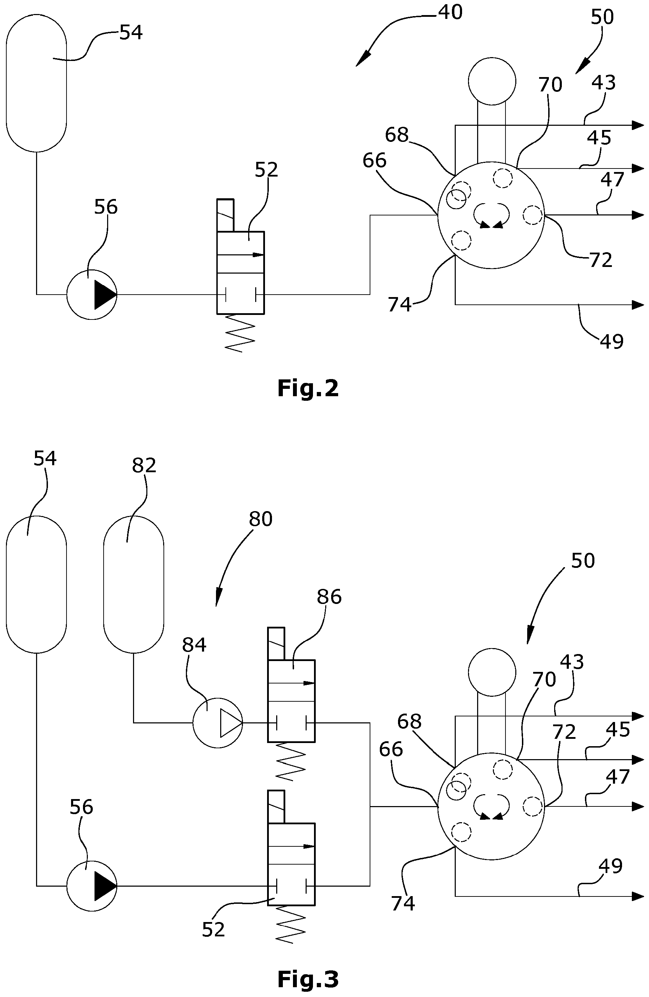

Die Figuren 2 bis 5 zeigen schematisch unterschiedliche Ausführungen der Reinigungsvorrichtung 40. Die in Figur 2 gezeigte Reinigungsvorrichtung 40 weist ein Reinigungsmittelreservoir 54, eine stromabwärts zum Reinigungsmittelreservoir 54 angeordnete Pumpe 56 und ein stromabwärts zur Pumpe 56 angeordnetes Reinigungsmittel-Absperrventil 52 auf, wobei das Reinigungsmittel-Absperrventil 52 als 2/2-Wege-Ventil ausgeführt ist. Weiterhin umfasst die Reinigungsvorrichtung 40 den Reinigungsmittelverteiler 50, über welchen das Reinigungsmittel auf die unterschiedlichen Reinigungsmittelleitungen 43, 45, 47, 49 verteilt und dadurch zu den unterschiedlichen Reinigungsdüsen 42, 44, 46, 48 geleitet werden kann.

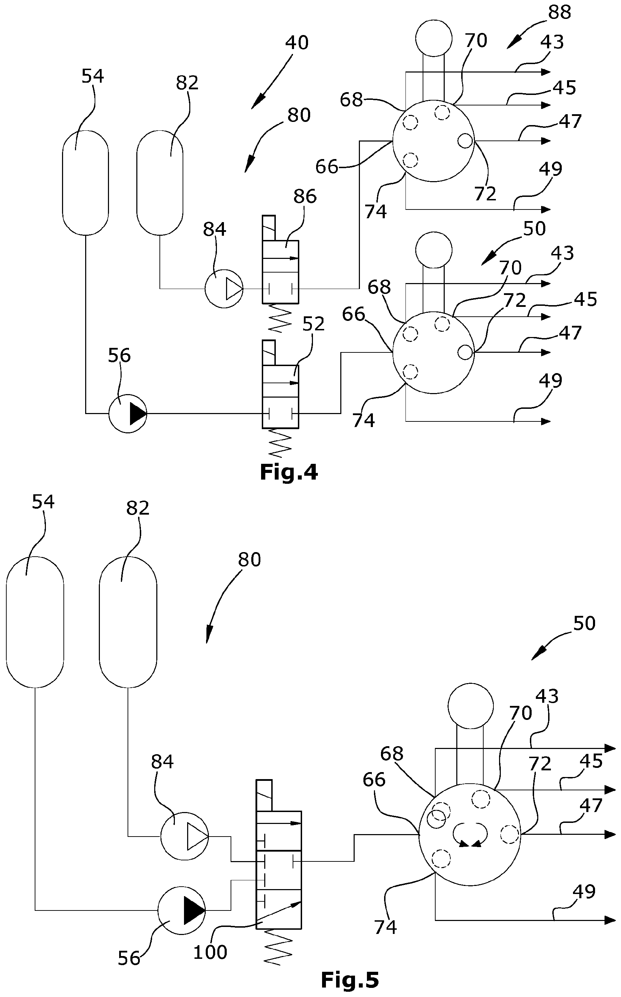

Die in den Figuren 3 und 4 gezeigten Ausführungen der Reinigungsvorrichtung 40 sind identisch zu der Ausführung in Figur 2 ausgeführt und weisen zusätzlich eine Luftzuführvorrichtung 80 auf. Die Luftzuführvorrichtung 80 weist ein Luftreservoir 82, einen Verdichter 84 und ein Luft-Absperrventil 86 auf. Bei der in Figur 3 gezeigten Ausführung der Reinigungsvorrichtung 40 ist die Luftzuführvorrichtung 80 mit dem Reinigungsmittelverteiler 50 verbunden, so dass sowohl das Reinigungsmittel als auch die Luft über einen einzigen Reinigungsmittelverteiler 50 an die Reinigungsdüsen 42, 44, 46, 48 verteilt werden können. Im Gegensatz dazu weist die in Figur 4 gezeigte Ausführung der Reinigungsmittelvorrichtung 40 einen zusätzlichen Verteiler 88 auf, welcher entweder mit den Reinigungsdüsen 42, 44, 46, 48 oder mit separaten, auf die optischen Sensoren 20, 22, 24, 26 bzw. die transparenten Abdeckungen 32, 34, 36, 38 der optischen Sensoren 20, 22, 24, 26 gerichtete Luftdüsen fluidisch verbunden sein kann.

Eine weitere, vierte Ausführung der Reinigungsvorrichtung 40 ist in Figur 5 schematisch dargestellt, wobei die vierte Ausführung im Wesentlichen der Ausführung der zweiten Ausführung der Reinigungsvorrichtung 40 aus Figur 3 entspricht. Der entscheidende Unterschied ist, dass das Reinigungsmittel-Absperrventil 52 und das Luft-Absperrventil 86 durch ein einziges ein 3/3-Wegeventil 100 gebildet sind. Das 3/3-Wegeventil 100 kann in einer ersten Stellung einen Reinigungsmittel-Volumenstrom und in einer zweiten Stellung einen Luft-Volumenstrom zum Reinigungsmittelverteiler 50 freigeben. In einer dritten Stellung des 3/3-Wegeventils 100 sind sowohl der Reinigungsmittel- als auch der Luft-Volumenstrom gesperrt.

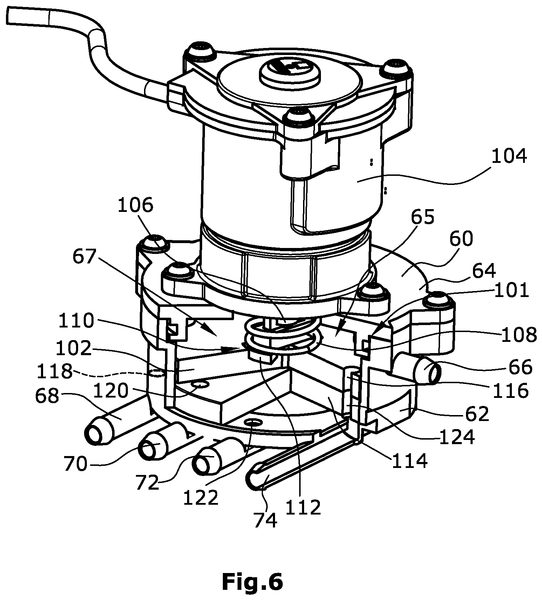

Ein Reinigungsmittelverteiler 50 ist in Figur 6 gezeigt. Der Reinigungsmittelverteiler 50 weist ein zweiteiliges Verteilergehäuse 60 auf, welches einen topfförmigen Gehäusegrundkörper 62 und einen mit dem Gehäusegrundkörper 62 verschraubten Gehäusedeckel 64 umfasst, wobei der Gehäusegrundkörper 62 und der Gehäusedeckel 64 einen Gehäuseinnenraum 65 begrenzen. Das Verteilergehäuse 60 weist einen an einer Seitenwand des Gehäusegrundkörpers 62 ausgebildeten Reinigungsmitteleinlass 66 auf, über welchen das Reinigungsmittel in den Reinigungsmittelverteiler 50 einströmen kann. Weiterhin umfasst das Verteilergehäuse 60 an einer Stirnwand vier Reinigungsmittelauslässe 68, 70, 72, 74 auf, an welchen jeweils eine der Reinigungsmittelleitungen 43, 45, 47, 49 anschließen.

Im Gehäuseinnenraum 65 ist ein Verteilerventil 101 mit einem Ventilkörper 102 angeordnet, welcher als eine Drehscheibe ausgeführt ist und drehbar in dem Gehäuseinnenraum 65 gelagert ist. Dabei liegt der Ventilkörper 102 mit seiner zylindrischen Umfangsfläche an einer zylindrischen Innenfläche des Gehäusegrundkörpers 62 an und begrenzt mit der Innenfläche des Gehäusegrundkörpers 62 und dem Gehäusedeckel 64 einen Einlassraum 67, in welchen der Reinigungsmitteleinlass 66 mündet. Außerdem liegt der Ventilkörper 102 mit einer dem Einlassraum 67 abgewandten Seite an einer starr an dem Gehäusegrundkörper 62 befestigten Gegenscheibe 114 an, wobei sowohl der Ventilkörper 102 als auch die Gegenscheibe 114 aus einem keramischen Werkstoff hergestellt sind.

Der Ventilkörper 102 weist eine einzige Durchgangsöffnung 116 auf. Die Gegenscheibe 114 und der Gehäusegrundkörper 62 weisen je Reinigungsmittelauslass 68, 70, 72, 74 eine durch die Gegenscheibe 114 und den Gehäusegrundkörper 64 durchgehende Verbindungsöffnung 118, 120, 122, 124 auf. Die Verbindungsöffnungen 118, 120, 122, 124 weisen jeweils eine Längsachse auf, welche auf dem gleichen Durchmesser wie die Mittelachse der Durchgangsöffnung 116 angeordnet sind, wodurch sich die Durchgangsöffnung 116 in Abhängigkeit von der Stellung des Ventilkörpers 102 mit einer der Verbindungsöffnungen 118, 120, 122, 124 überlagern kann und dadurch eine fluidische Verbindung zwischen dem Einlassraum 67 und dem entsprechenden Reinigungsmittelauslass 68, 70, 72, 74 hergestellt werden kann.

Zur Verstellung des Ventilkörpers 102 ist dieser mit einer Aktorwelle 106 eines Aktors 104 drehfest verbunden, wobei der Aktor 104 an einer Außenseite des Gehäusedeckels 64 befestigt ist und mit der Aktorwelle 106 in den Gehäuseinnenraum 65 und damit in den Einlassraum 67 ragt. Die drehfeste Verbindung zwischen dem Ventilkörper 102 und der Aktorwelle 106 ist eine ausschließlich in Drehrichtung wirkende formschlüssige Verbindung, wobei der Ventilkörper 102 eine nutartige Aussparung 110 aufweist und die Aktorwelle 106 stirnseitig ein zur nutartigen Aussparung 110 komplementäres Eingriffselement 112 aufweist. In Längsrichtung der Aktorwelle 106 zwischen dem Ventilkörper 102 und dem Gehäusedeckel 64 ist ein Federelement 108 angeordnet, welches die Aktorwelle 106 radial umgibt und den Ventilkörper 102 axial belastet.

Im Betrieb der Sensorvorrichtung 12 wird bei einer Verschmutzung eines optischen Sensors 20, 22, 24, 26 die Reinigungsvorrichtung 40 aktiviert. Dabei werden das Reinigungsmittel-Absperrventil 52 in seine Offenstellung bzw. das 3/3-Wegeventil 100 in seine erste Stellung verstellt und die Pumpe 56 betätigt. Außerdem wird der Ventilkörper 102 des Verteilerventils 101 in eine dem verschmutzten, optischen Sensor 20, 22, 24, 26 zugeordnete Stellung verdreht. Ist beispielsweise der optische Sensor 20, welcher den Frontbereich des Kraftfahrzeugs 10 erfasst, verschmutzt, wird der Ventilkörper 102 derart verdreht, dass die Durchgangsöffnung 116 des Ventilkörpers 102 sich mit der Verbindungsöffnung 118 überlagern. Dadurch wird eine fluidische Verbindung zwischen dem Einlassraum 67, welcher mit Reinigungsmittel gefüllt ist, und der Reinigungsmittelleitung 43 hergestellt, wodurch Reinigungsmittel zur Reinigungsdüse 42 strömt. Nach dem Reinigungsvorgang kann gemäß den Ausführungen aus den Figuren 3, 4 und 5 ein Trocknungsvorgang folgen. Hierbei wird die Luftzuführvorrichtung 80 aktiviert und die Reinigungsvorrichtung zumindest teilweise deaktiviert. Bei der Aktivierung der Luftzuführvorrichtung 80 wird der Verdichter 84 betätigt und das Luft-Absperrventil 86 in seine Offenstellung bzw. das 3/3-Wegeventil 100 in seine zweite Stellung verstellt. Die Luft strömt aus dem Luftreservoir 82 in den Reinigungsmittelverteiler 50, dessen Verteilerventil 101 weiterhin auf den zuvor gereinigten optischen Sensor 20 eingestellt ist, zu der Reinigungsdüse 42. Alternativ strömt die Luft gemäß der Ausführung gemäß Figur 4 in den Verteiler 88 und von dort aus zu der Reinigungsdüse 42.

Durch die Anströmung des optischen Sensors 20 mit der Luft wird das Reinigungsmittel von der Abdeckung 32 des optischen Sensors 20 entfernt. Die Luftzuführvorrichtung 80 kann auch unabhängig von der Reinigungsmittelvorrichtung 40 aktiviert werden, um beispielsweise Staub von der Abdeckung 32, 34, 36, 38 der optischen Sensoren 20, 22, 24, 26 zu entfernen.

Es sollte deutlich sein, dass verschiedene konstruktive Änderungen der Sensorvorrichtung denkbar sind, ohne den Schutzbereich des Hauptanspruchs zu verlassen. Insbesondere kann die Reinigungsvorrichtung 40, d.h. insbesondere der Reinigungsmittelverteiler 50, oder die Luftzuführvorrichtung 80 anders ausgeführt werden.

## Patentansprüche

1. Sensorvorrichtung für ein Kraftfahrzeug, mit
mindestens zwei optischen Sensoren (20, 22, 24, 26), und
einer Reinigungsvorrichtung (40) mit
- mehreren Reinigungsdüsen (42, 44, 46, 48), wobei auf die optischen Sensoren (20, 22, 24, 26) jeweils eine Reinigungsdüse (42, 44, 46, 48) gerichtet ist, und
- einem Reinigungsmittelverteiler (50), welcher ein Verteilergehäuse (60) mit einem Reinigungsmitteleinlass (66) und mehrere Reinigungsmittelauslässe (68, 70, 72, 74) aufweist, wobei der Reinigungsmitteleinlass (66) mit einem Reinigungsmittelreservoir (54) fluidisch verbindbar ist und die Reinigungsmittelauslässe (68, 70, 72, 74) mit jeweils einer Reinigungsdüse (42, 44, 46, 48) fluidisch verbunden sind,
wobei der Reinigungsmittelverteiler (50) ein Verteilerventil (101) mit einem einzigen Ventilkörper (102) aufweist, wobei der Ventilkörper (102) fluidisch zwischen dem Reinigungsmitteleinlass (66) und den Reinigungsmittelauslässen (68, 70, 72, 74) angeordnet ist, und wobei der Ventilkörper (102) in Abhängigkeit von seiner Stellung den Reinigungsmittelmassenstrom zwischen dem Reinigungsmitteleinlass (66) und den Reinigungsmittelauslässen (68, 70, 72, 74) steuert, wobei der Ventilkörper (102) eine Drehscheibe (103) ist, welche an dem Verteilergehäuse (60) anliegt und relativ zum Verteilergehäuse (60) verdrehbar ist, wobei die Drehscheibe (103) eine Durchgangsöffnung (116) aufweist, welche mit dem Reinigungsmitteleinlass (66) fluidisch verbunden ist, wobei die Durchgangsöffnung (116) sich in unterschiedlichen Stellungen der Drehscheibe (103) mit unterschiedlichen, an dem Verteilergehäuse (60) vorgesehenen Reinigungsmittelauslässen (68, 70, 72 ,74) überlagert, **dadurch gekennzeichnet dass**
das Verteilergehäuse (60) eine gehäusefeste Gegenscheibe (114) aufweist, an welcher die Drehscheibe (103) anliegt, wobei die Gegenscheibe (103) mehrere Verbindungsöffnungen (118, 120, 122, 124) aufweist, wobei jede Verbindungsöffnung (118, 120, 122, 124) mit jeweils einem Reinigungsmittelauslass (68, 70, 72, 74) fluidisch verbunden ist.

2. Sensorvorrichtung nach Anspruch 1,
**dadurch gekennzeichnet, dass**
die Drehscheibe (103) und die Gegenscheibe (114) aus einem Keramikwerkstoff hergestellt sind.

3. Sensorvorrichtung nach einem der vorhergehenden Ansprüche,
**dadurch gekennzeichnet, dass**
der Reinigungsmitteleinlass (66) an einer Seitenwand des Verteilergehäuses (60) vorgesehen ist und die Reinigungsmittelauslässe (68, 70, 72, 74) an einer Stirnwand des Verteilergehäuses (60) vorgesehen sind.

4. Sensorvorrichtung nach einem der vorhergehenden Ansprüche,
**dadurch gekennzeichnet, dass**
an einer Außenseite des Verteilergehäuses (60) ein Aktor (104) angeordnet ist, welcher mit einer Aktorwelle (106) in das Verteilergehäuse (60) ragt und mit dem Ventilkörper (102) wirkverbunden ist.

5. Sensorvorrichtung nach Anspruch 4,
**dadurch gekennzeichnet, dass**
die Aktorwelle (106) in Drehrichtung formschlüssig mit der Drehscheibe (103) verbunden ist.

6. Sensorvorrichtung nach einem der vorhergehenden Ansprüche,
**dadurch gekennzeichnet, dass**
in Strömungsrichtung des Reinigungsmittels zwischen dem Reinigungsmittelverteiler (50) und dem Reinigungsmittelreservoir (54) ein Reinigungsmittel-Absperrventil (52) und eine Pumpe (56) angeordnet sind.

7. Sensorvorrichtung nach einem der vorhergehenden Ansprüche,
**dadurch gekennzeichnet, dass**
eine Luftzuführvorrichtung (80) vorgesehen ist, welche ein Luftreservoir (82) und einen Verdichter (84) aufweist, wobei das Luftreservoir (82) mit dem Reinigungsmitteleinlass (66) des Reinigungsmitterverteilers (50) fluidisch verbindbar ist.

8. Sensorvorrichtung nach Anspruch 7,
**dadurch gekennzeichnet, dass**
in Strömungsrichtung der Luft zwischen dem Reinigungsmittelverteiler (50) und dem Luftreservoir (82) ein Luft-Absperrventil (86) und ein Verdichter (84) angeordnet sind.

9. Sensorvorrichtung nach Anspruch 6 und 8,
**dadurch gekennzeichnet, dass**
ein 3/3-Wegeventil (100) vorgesehen ist, welches das Reinigungsmittel-Absperrventil (52) und das Luft-Absperrventil (86) bildet, wobei in einer ersten Stellung das 3/3-Wegeventil (100) geschlossen ist, in einer zweiten Stellung das Reinigungsmittelreservoir (84) mit dem fluidisch verbunden ist und in einer dritten Stellung das Luftreservoir (82) mit dem Reinigungsmitteleinlass (66) fluidisch verbunden ist.

10. Sensorvorrichtung nach Anspruch 6, 7 oder 9,
**dadurch gekennzeichnet, dass**
das Reinigungsmittel-Absperrventil (52), das Luft-Absperrventil (86) und/oder das 3/3-Wegeventil (100) als ein elektromagnetisches Ventil ausgeführt ist.

11. Verfahren zum Betreiben einer Sensorvorrichtung nach Anspruch 1 bis 10, mit folgenden Schritten:
- Feststellen einer Verschmutzung eines optischen Sensors,
- Verstellen des Ventilkörpers in eine vordefinierte Position zum Herstellen einer fluidischen Verbindung zwischen dem Reinigungsmitteleinlass und dem dem verschmutzen Sensor zugeordneten Reinigungsmittelauslasses,
- Betätigen der Reinigungsmittel-Pumpe.

## Claims

1. A sensor device for a motor vehicle, with
at least two optical sensors (20, 22, 24, 26), and
a cleaning device (40) with
- a plurality of cleaning nozzles (42, 44, 46, 48), wherein respectively one cleaning nozzle (42, 44, 46, 48) is directed onto the optical sensors (20, 22, 24, 26), and
- a cleaning agent distributor (50), which has a distributor housing (60) with a cleaning agent inlet (66) and a plurality of cleaning agent outlets (68, 70, 72, 74), wherein the cleaning agent inlet (66) can be fluidically connected to a cleaning agent reservoir (54), and the cleaning agent outlets (68, 70, 72, 74) are fluidically connected respectively to a cleaning nozzle (42, 44, 46, 48),
wherein
the cleaning agent distributor (50) has a distributor valve (101) with a single valve body (102), wherein the valve body (102) is arranged fluidically between the cleaning agent inlet (66) and the cleaning agent outlets (68, 70, 72, 74), and wherein the valve body (102), depending on its position, controls the cleaning agent mass flow between the cleaning agent inlet (66) and the cleaning agent outlets (68, 70, 72, 74), wherein the valve body (102) is a rotary disk (103) which bears against the distributor housing (60) and can be rotated relative to the distributor housing (60), wherein the rotary disk (103) has a through-opening (116), which is fluidically connected to the cleaning agent inlet (66), wherein the through-opening (116), in different positions of the rotary disk (103), overlaps with different cleaning agent outlets (68, 70, 72, 74) provided on the distributor housing (60),
**characterized in that**
the distributor housing (60) has a counter disk (114) fixed to the housing, against which counter disk the rotary disk (103) rests, wherein the counter disk (103) has a plurality of connection openings (118), 120, 122, 124), wherein each connection opening (118, 120, 122, 124) is fluidically connected to respectively a cleaning agent outlet (68, 70, 72, 74).

2. The sensor device according to Claim 1,
**characterized in that**
the rotary disk (103) and the counter disk (114) are made of a ceramic material.

3. The sensor device according to one of the preceding claims,
**characterized in that**
the cleaning agent inlet (66) is provided on a side wall of the distributor housing (60) and the cleaning agent outlets (68, 70, 72, 74) are provided on an end wall of the distributor housing (60).

4. The sensor device according to one of the preceding claims,
**characterized in that**
an actuator (104) is arranged on an outer side of the distributor housing (60), which actuator protrudes into the distributor housing (60) with an actuator shaft (106) and is operatively connected to the valve body (102).

5. The sensor device according to Claim 4,
**characterized in that**
the actuator shaft (106) is connected to the rotary disk (103) in a form-fitting manner in the direction of rotation.

6. The sensor device according to one of the preceding claims,
**characterized in that**
a cleaning agent shut-off valve (52) and a pump (56) are arranged in the flow direction of the cleaning agent between the cleaning agent distributor (50) and the cleaning agent reservoir (54).

7. The sensor device according to one of the preceding claims,
**characterized in that**
an air supply device (80) is provided which has an air reservoir (82) and a compressor (84), wherein the air reservoir (82) is fluidically connectable to the cleaning agent inlet (66) of the cleaning agent distributor (50).

8. The sensor device according to Claim 7,
**characterized in that**
an air shut-off valve (86) and a compressor (84) are arranged in the flow direction of the air between the cleaning agent distributor (50) and the air reservoir (82).

9. The sensor device according to Claim 6 and 8,
**characterized in that**
a 3/3-way valve (100) is provided, which forms the cleaning agent shut-off valve (52) and the air shut-off valve (86), wherein in a first position the 3/3-way valve (100) is closed, in a second position the cleaning agent reservoir (84) is fluidically connected to it, and in a third position the air reservoir (82) is fluidically connected to the cleaning agent inlet (66).

10. The sensor device according to Claim 6, 7 or 9,
**characterized in that**
the cleaning agent shut-off valve (52), the air shut-off valve (86) and/or the 3/3-way valve (100) is embodied as an electromagnetic valve.

11. A method for operating a sensor device according to Claim 1 to 10, with the following steps:
- detection of contamination of an optical sensor,
- adjustment of the valve body into a predefined position for establishing a fluidic connection between the cleaning agent inlet and the cleaning agent outlet associated with the contaminated sensor,
- actuation of the cleaning agent pump.

## Revendications

1. Dispositif de détection pour un véhicule automobile,
avec au moins deux capteurs optiques (20, 22, 24, 26), et
un dispositif de nettoyage (40) avec
- plusieurs buses de nettoyage (42, 44, 46, 48), dans lequel respectivement une buse de nettoyage (42, 44, 46, 48) est dirigée sur les capteurs optiques (20, 22, 24, 26), et
- un distributeur de produit de nettoyage (50), qui présente un boîtier de distributeur (60) avec une entrée de produit de nettoyage (66) et plusieurs sorties de produit de nettoyage (68, 70, 72, 74), dans lequel l'entrée de produit de nettoyage (66) peut être reliée fluidiquement à un réservoir de produit de nettoyage (54) et les sorties de produit de nettoyage (68, 70, 72, 74) sont chacune reliées fluidiquement à une buse de nettoyage (42, 44, 46, 48),
dans lequel le distributeur de produit de nettoyage (50) présente une vanne de distributeur (101) avec un seul corps de vanne (102), dans lequel le corps de vanne (102) est fluidiquement disposé entre l'entrée de produit de nettoyage (66) et les sorties de produit de nettoyage (68, 70, 72, 74), et dans lequel le corps de vanne (102) en fonction de sa position commande l'écoulement massique de produit de nettoyage entre l'entrée de produit de nettoyage (66) et les sorties de produit de nettoyage (68, 70, 72, 74), dans lequel le corps de vanne (102) est une plaque tournante (103) qui s'applique contre le boîtier de distributeur (60) et qui peut être tournée par rapport au boîtier de distributeur (60), dans lequel la plaque tournante (103) présente une ouverture de passage (116) qui est reliée fluidiquement à l'entrée de produit de nettoyage (66), dans lequel l'ouverture de passage (116) dans différentes positions de la plaque tournante (103) se superpose aux différentes sorties de produit de nettoyage (68, 70, 72, 74) prévues sur le boîtier de distributeur (60), **caractérisé en ce que** le boîtier de distributeur (60) présente une contre-plaque (114) solidaire du boîtier contre laquelle s'applique la plaque tournante (103), dans lequel la contre-plaque (103) présente plusieurs ouvertures de liaison (118, 120, 122, 124), dans lequel chaque ouverture de liaison (118, 120, 122, 124) est reliée fluidiquement à respectivement une sortie de produit de nettoyage (68, 70, 72, 74).

2. Dispositif de détection selon la revendication 1,
**caractérisé en ce que**
la plaque tournante (103) et la contre-plaque (114) sont fabriquées dans un matériau céramique.

3. Dispositif de détection selon l'une quelconque des revendications précédentes,
**caractérisé en ce que**
l'entrée de produit de nettoyage (66) est prévue sur une paroi latérale du boîtier de distributeur (60) et les sorties de produit de nettoyage (68, 70, 72, 74) sont prévues sur une paroi frontale du boîtier de distributeur (60).

4. Dispositif de détection selon l'une quelconque des revendications précédentes,
**caractérisé en ce que**
un actionneur (104), qui entre avec un arbre d'actionneur (106) dans le boîtier de distributeur (60) et est en liaison fonctionnelle avec le corps de vanne (102), est disposé sur un côté extérieur du boîtier de distributeur (60).

5. Dispositif de détection selon la revendication 4,
**caractérisé en ce que**
l'arbre d'actionneur (106) est relié par complémentarité de formes à la plaque tournante (103) dans le sens de rotation.

6. Dispositif de détection selon l'une quelconque des revendications précédentes,
**caractérisé en ce que**
une vanne d'arrêt de produit de nettoyage (52) et une pompe (56) sont disposées dans le sens d'écoulement du produit de nettoyage entre le distributeur de produit de nettoyage (50) et le réservoir de produit de nettoyage (54).

7. Dispositif de détection selon l'une quelconque des revendications précédentes,
**caractérisé en ce que**
un dispositif d'amenée d'air (80) est prévu, qui présente un réservoir d'air (82) et un compresseur (84), dans lequel le réservoir d'air (82) peut être relié fluidiquement à l'entrée de produit de nettoyage (66) du distributeur de produit de nettoyage (50).

8. Dispositif de détection selon la revendication 7,
**caractérisé en ce que**
une vanne d'arrêt d'air (86) et un compresseur (84) sont disposés dans le sens d'écoulement de l'air entre le distributeur de produit de nettoyage (50) et le réservoir d'air (82).

9. Dispositif de détection selon les revendications 6 et 8,
**caractérisé en ce que**
une vanne 3/3 voies (100) est prévue, qui forme la vanne d'arrêt de produit de nettoyage (52) et la vanne d'arrêt d'air (86), dans lequel, dans une première position, la vanne 3/3 voies (100) est fermée, dans une deuxième position, le réservoir de produit de nettoyage (84) est relié fluidiquement audit et, dans une troisième position, le réservoir d'air (82) est relié fluidiquement à l'entrée de produit de nettoyage (66).

10. Dispositif de détection selon la revendication 6, 7 ou 9,
**caractérisé en ce que**
la vanne d'arrêt de produit de nettoyage (52), la vanne d'arrêt d'air (86) et/ou la vanne 3/3 voies (100) est conçue comme une vanne électromagnétique.

11. Procédé pour faire fonctionner un dispositif de détection selon les revendications 1 à 10, avec les étapes suivantes :
- la constatation d'un encrassement d'un capteur optique,
- le déplacement du corps de vanne dans une position prédéfinie pour établir une liaison fluidique entre l'entrée de produit de nettoyage et la sortie de produit de nettoyage associée au capteur encrassé,
- l'actionnement de la pompe à produit de nettoyage.
